# EUROPEAN PATENT SPECIFICATION

(11) **EP 2 789 909 B1**
(45) Date of publication and mention of the grant of the patent: **20.09.2017**
(21) Application number: 13461526.9
(22) Date of filing: 12.04.2013
(51) Int. Cl.: F22B 1/18, F22B 9/00, F22B 13/04, F28D 7/16, F28D 9/00, F28F 9/22, F28F 9/16, F28D 7/08, F28D 21/00

(54) **Steam generator**
Dampferzeuger
Générateur de vapeur

(43) Date of publication of application: 15.10.2014
(73) Proprietor: RETECH Spólka z o.o., 39-300 Mielec (PL)
(72) Inventor: Ziarko, Andrzej, PL39-300 Mielec (PL); Ziarko, Krzysztof, PL39-300 Mielec (PL); Ziarko, Boguslaw, 82418 Murnau (DE)
(74) Representative: Sielewiesiuk, Jakub

(56) References cited:
- EP-A1- 1 876 390
- US-A- 374 615
- US-A- 1 558 493
- US-A1- 2002 121 249
- US-B1- 6 237 469

## Description

The present invention relates to a steam generator, containing heat exchanger, used especially in baking equipment.

There is known from the Polish application No P.329018 a steam generator, especially for baking ovens, characterized in that the vertical strips are fixed to a metal plate on the whole length of theirs inner edges, where the plate has along vertical edges a row of holes for fixing, whereas at the top, the upper tank is located, the bottom of which has on both sides at least one hole, and at least one hole is connected with one vertical channel having the length ca 1/n of length of vertical strips.

There is known from description of the European application No EP 2428728 a steam generator consisting of heat exchanger, liquid collector and steam collector. Heat exchanger is connected with few heat exchange subassemblies with the same structure. The heat exchange subassembly contains spiral tubes, central cylinder and a sleeve. Spiral tubes are concentric, with different radii and are helically located in annular space between the central cylinder and the sleeve, to create at least one concentric heat exchanging pillar. One end of liquid collector is connected with the main pipe, feeding water tubes, and the other end of liquid collector is connected with bundle of spiral tubes. One end of steam collector is connected with the main steam pipe, and the other end with a bundle of spiral tubes.

Document US 6 237 469 B1 discloses a steam generator with a lower housing and baffles.

A steam generator, according to the invention, containing a housing, inside of which a heat exchanger, a combustion chamber and collectors are located, is characterized in that at least one heat exchanger is located inside of a lower housing, closed with an upper cover. Said heat exchanger consists of a rectangular lower housing, closed with an upper cover. To the bottom of said lower housing, baffles and a directing baffle in the form of rectangular plates with L-shaped section are alternately fixed by means of said L-shaped section. The length of the baffles is smaller than the width of the lower housing, and the directing baffle has an oblique section, located opposite to the inlet of exhaust gases coming from the combustion chamber through the connector. The baffles create zigzag channel for exhaust gases. To the outlet hole of the lower housing, the exhaust gases collector is connected through a coupler.

The lower box of the generator has a supplying hole in a side wall, a hole in a front wall for receiving the combustion chamber and an outlet hole for steam, whereas an outlet hole for exhaust gases in a bottom wall, connected with outlet collector, is located.

Preferably, the combustion chamber has a shape of a solid, made from welded sheets and equipped with connecting holes.

Preferably, the combustion chamber has a shape of a solid, made from tube segment and equipped with connecting holes.

Preferably, the one end of the combustion chamber has a shape of casting with exhaust channels.

Steam generator, according to invention, thanks to usage of heat exchanger, which has a form of tight box with baffles, is characterized by significantly higher efficiency and power, which may be adjusted by changing the number of baffles. Design of generator allows for reduction of production costs, also by elimination of production waste.

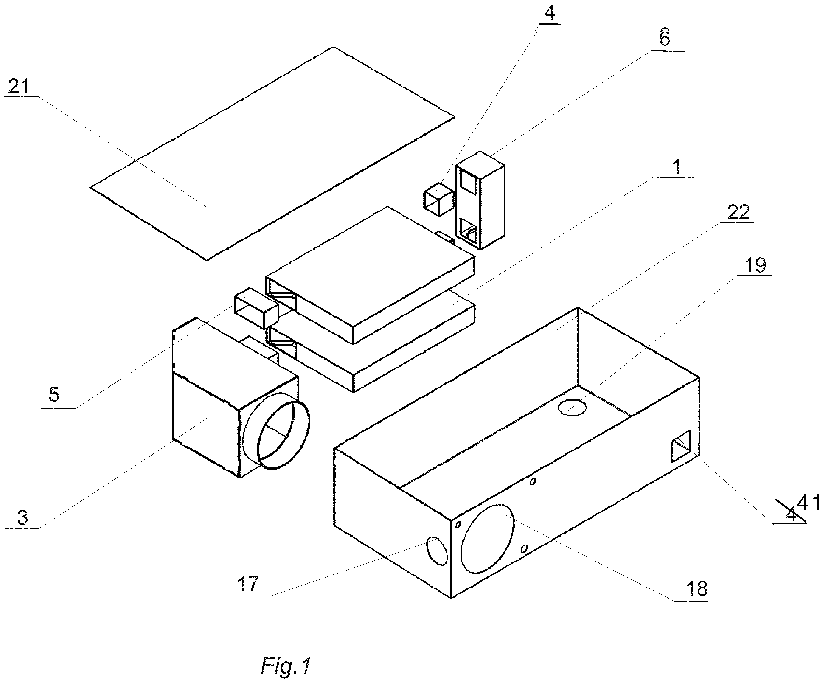

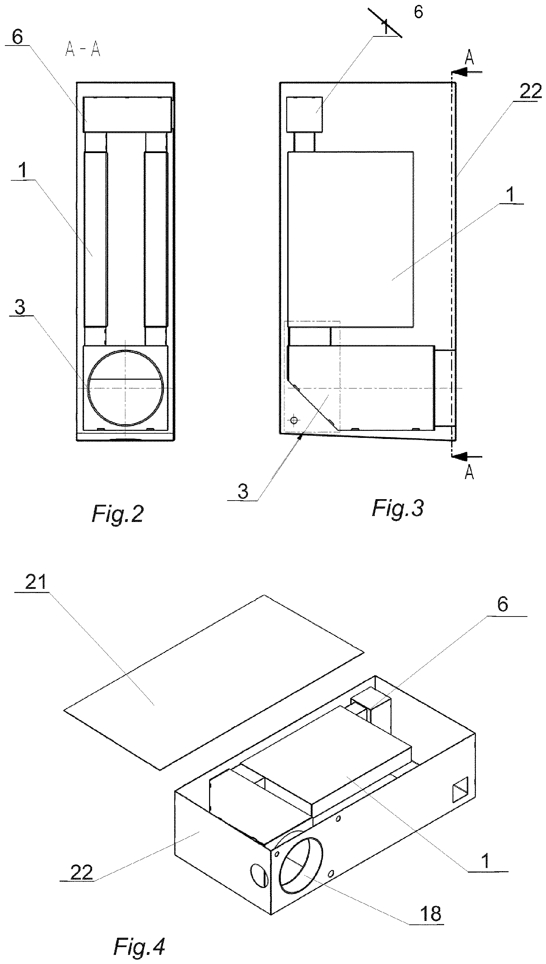

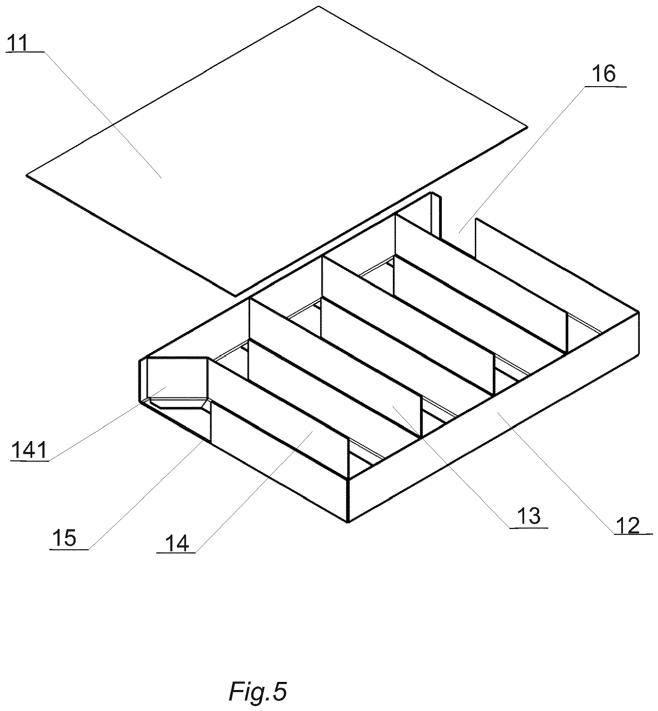

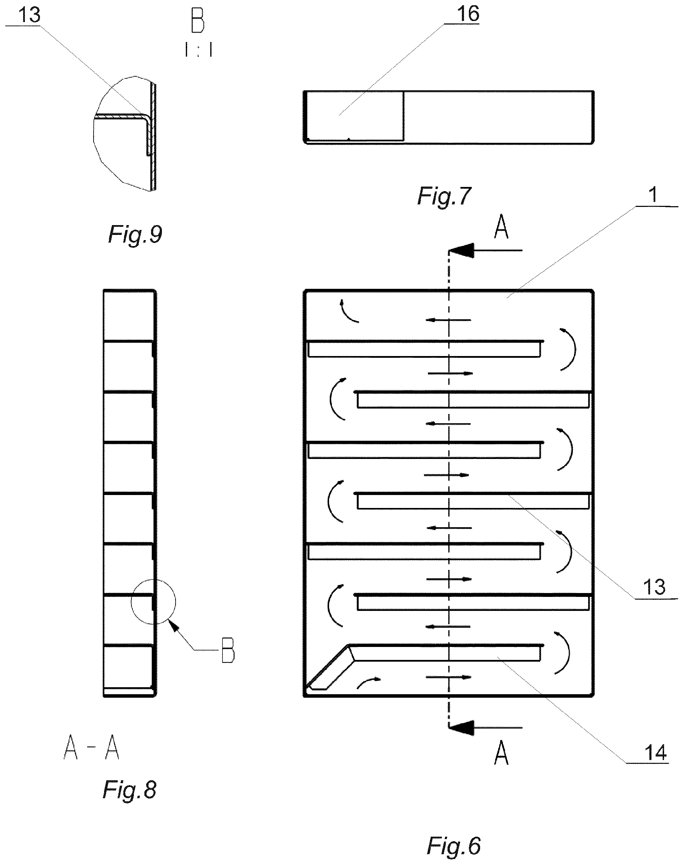

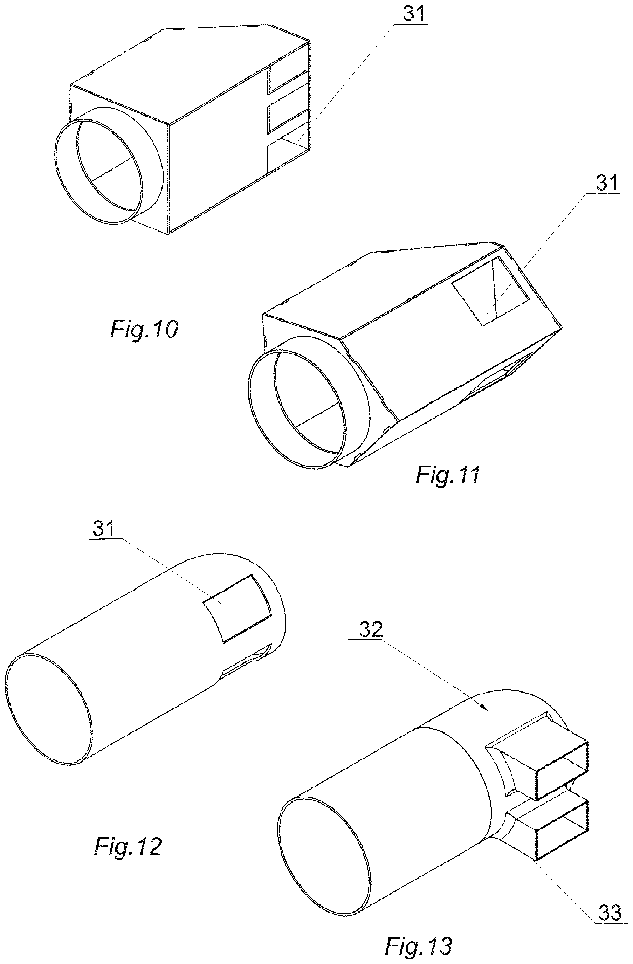

The subject of invention is presented on the drawing, where fig. 1 presents exploded view of generator, fig. 2 - section A-A from fig. 3, fig. 3 - top view of generator without upper cover, fig. 4 - view of generator with removed upper cover, fig. 5 - exploded view of heat exchanger, fig. 6 - top view of exchanger with shown media flow direction, fig. 7 - rear view of heat exchanger, fig. 8 - section A-A from fig. 6, fig. 9 - detail B from fig. 8, fig. 10 up to fig. 13 - shapes of combustion chamber.

Inside lower box 22, closed with upper cover 21, are located two heat exchangers 1, connected by rectangular couplers 5 to combustion chamber 3. The heat exchanger consists rectangular lower housing 12, closed by upper plate 11, to bottom of which baffles 13 are alternately fixed, beneficially parallel, whose length is smaller than width of lower housing 12, and directing baffle 14, with oblique section 141 located opposite inlet hole 15 of exhaust gases, coming out from combustion chamber 2 through the coupler 5. Baffles create zigzag channel for the flow of exhaust gases, whereas to outlet hole 16 of lower housing 12, by coupler 4 outlet collector 6 of exhaust gases is connected.

The lower box 22 of generator has in side wall supplying hole 17, in front wall the hole 18 for combustion chamber 3 and the steam outlet hole 41 whereas in lower wall the exhaust outlet hole 19, connected to outlet collector 6, is located.

Combustion chamber 3 has a form of 3D solid, welded from sheets, equipped with connecting holes 31 or made from segment of tube, equipped with connecting holes 31.

Preferably, combustion chamber 3 has form of casting 32 with outlet channels 33.

## Claims

1. A steam generator containing a housing, inside of which a heat exchanger, a combustion chamber and collectors are located, wherein at least one heat exchanger (1) with zigzag channels for exhaust gases is located inside of a lower housing (22), closed with an upper cover (21), and connected by a rectangular coupler (5) with the combustion chamber (3), said heat exchanger consists of a cuboid lower housing (12) closed with an upper cover (11), wherein to the bottom of said cuboid lower housing (12), baffles (13) in the form of rectangular plates with L-shaped section are alternately fixed by means of said L-shaped section, and at the same time the length of the baffles is smaller than the width of the cuboid lower housing (12), and a directing baffle (14) has an oblique section (141) located opposite to the inlet hole (15) of exhaust gases coming from the combustion chamber (3) through the coupler (5), whereas to the outlet hole (16) of said cuboid lower housing (12), the exhaust gases collector (6) is connected through a coupler (4).

2. A steam generator, according to claim 1, **characterized in that** the lower housing (22) of the generator is a lower box (22) and has a supplying hole (17) in a side wall, a hole (18) in a front wall for receiving the combustion chamber (3) and a steam outlet hole (41), whereas an exhaust gases outlet hole (19) in lower wall is connected with the exhaust collector (6).

3. A steam generator, according to claim 1, **characterized in that** the combustion chamber (3) has a form of solid, made of welded sheets and equipped with connecting holes (31).

4. A steam generator, according to claim 1, **characterized in that** the combustion chamber (3) has a shape of solid, made from segment of tube and equipped with connecting holes (31).

5. A steam generator, according to claim 3 or 4, **characterized in that** the one end of the combustion chamber (3) has a form of casting (32) with outlet channels (33).

## Patentansprüche

1. Der Dampferzeuger, bestehend aus einem Gehäuse, in dem sich befinden: der Wärmeaustauscher, die Verbrennungskammer und die Kollektoren, wobei sich mindestens ein Wärmeaustauscher (1) mit einem Zick-Zack-Kanalsystem zum Ableiten der Verbrennungsgase innerhalb des unteren Gehäuses (22) befindet, das von oben mit einer Abdeckung (21) geschlossen und durch ein rechteckiges Anschluß (5) mit der Verbrennungskammer (3) verbunden ist, der erwähnte Wärmeaustauscher besteht aus dem quaderförmigen unteren Gehäuse (12) mit einer Abdeckung (11) von oben geschlossen, wobei die Trennwände (13) in Form von rechtwinkligen Platten mit einem Abschnitt in Form des Buchstabens L im Wechsel mit eben diesem Abschnitt in Form des Buchstabens L zum Boden des erwähnten quaderförmigen unteren Gehäuses (12) befestigt werden, und gleichzeitig die Länge der Trennwände geringer als die Breite des quaderförmigen unteren Gehäuses (12) ist, und die Richtungstrennwand (14) einen schrägen Abschnitt (141) hat, der gegenüber der Einlassöffnung (15) für die aus der Verbrennungskammer (3) durch den Anschluß (5) abgeleiteten Abgase angeordnet ist, dagegen der Abgaskollektor (6) an die Auslassöffnung (16) des erwähnten quaderförmigen unteren Gehäuses (12) mit Hilfe des Anschlusses (4) angeschlossen wird.

2. Der Dampferzeuger gemäß Anspruch 1 **dadurch gekennzeichnet, dass** das untere Gehäuse (22) des Dampferzeugers die untere Kammer (22) darstellt und in der Seitenwand ein Zuführungsloch (17), in der Vorderwand das Loch (18), in das die Verbrennungskammer eingeht sowie die Auslassöffnung des Dampfes (41) hat, die Auslassöffnung der Abgase (19) in der unteren Wand wird dagegen an den Abgaskollektor (6) angeschlossen.

3. Der Dampferzeuger gemäß Anspruch 1 **dadurch gekennzeichnet, dass** die Verbrennungskammer (3) die Form eines aus Blechen zusammengeschweißten Körpers hat und mit den Anschlussöffnungen (31) ausgerüstet ist.

4. Der Dampferzeuger gemäß Anspruch 1 **dadurch gekennzeichnet, dass** die Verbrennungskammer (3) die Form eines aus einem Rohrabschnitt gefertigten Körpers hat und mit den Anschlussöffnungen (31) ausgerüstet ist.

5. Der Dampferzeuger gemäß Anspruch 3 oder 4 **dadurch gekennzeichnet, dass** ein Ende der Verbrennungskammer (3) die Form einen Gusses (32) mit Auslasskanälen (33) hat.

## Revendications

1. Un générateur de vapeur qui se compose d'un boîtier dans lequel il y a : un échangeur de chaleur, une chambre de combustion et des collecteurs, où au moins un échangeur de chaleur (1) avec un système de canaux en zigzag pour les gaz de combustion se trouve à l'intérieur du boîtier inférieur (22), fermé par le couvercle supérieur (21) et relié au moyen d'un connecteur rectangulaire (5) avec la chambre de combustion (3), l'échangeur de chaleur précité se compose d'un boîtier inférieur parallélépipédique (12) fermé par le couvercle supérieur (11) où les cloisons (13) sous forme des plaques rectangulaires avec un fragment en forme de L sont fixées alternativement avec ce fragment en L au fond du boîtier inférieur parallélépipédique précité (12) et en même temps la longueur des cloisons est inférieure à la largeur du boîtier inférieur parallélépipédique (12), et la cloison de direction (14) possède un fragment oblique (141), situé à l'opposé de l'ouverture d'entrée (15) des gaz de combustion évacués de la chambre de combustion (3) à travers du connecteur (5), tandis que à l'ouverture de sortie (16) du boîtier inférieur parallélépipédique précité (12) le collecteur d'échappement (6) est relié par le connecteur (4).

2. Un générateur de vapeur selon la revendication 1 **caractérisé en ce que** le boîtier inférieur (22) du générateur constitue un compartiment inférieur (22) équipé de l'ouverture d'alimentation (17) dans la paroi latérale, de l'ouverture (18) dans la paroi avant, recevant la chambre de combustion recevant, et de l'ouverture de sortie de la vapeur (41), tandis que l'ouverture de sortie de gaz de combustion (19) dans la paroi inférieure est reliée au collecteur d'échappement (6).

3. Un générateur de vapeur selon la revendication 1 **caractérisé en ce que** la chambre de combustion (3) constitue un solide réalisé des feuilles de tôlé soudées et équipé des ouvertures de raccordement (31).

4. Un générateur de vapeur selon la revendication 1 **caractérisé en ce que** la chambre de combustion (3) constitue un solide réalisé d'un fragment de tube et équipé des ouvertures de raccordement (31).

5. Un générateur de vapeur selon la revendication 3 ou 4 **caractérisé en ce que** l'une extrémité de la chambre de combustion (3) a une forme de moulage (32) avec les canaux de sortie (33).
